# EUROPÄISCHE PATENTANMELDUNG

(11) **EP 4 373 029 A1**
(43) Veröffentlichungstag der Anmeldung: **22.05.2024**
(21) Anmeldenummer: 22208136.6
(22) Anmeldetag: 17.11.2022
(51) Int. Cl.: H04L 9/32, H04L 9/00

(54) **VERFAHREN UND VORRICHTUNG ZUR AUTHENTIFIZIERUNG EINES ADDITIV-GEFERTIGTEN BAUTEILS**

(71) Anmelder: HENSOLDT Sensors GmbH, 82024 Taufkirchen (DE)
(72) Erfinder: SANDER, Jörg, 89075 Ulm (DE); BALTES, Rolf, 80337 München (DE); SALOMON, Andreas, 81925 München (DE); LURTZ, Patrik, 85435 Erding (DE); HEHN, Tobias, 85435 Erding (DE)
(74) Vertreter: LifeTech IP Spies & Behrndt Patentanwälte PartG mbB

(57) **Zusammenfassung**

Eine Vorrichtung (100) zum Authentifizieren eines additiv-gefertigten Bauteils (50) ist offenbart, wobei das additiv-gefertigte Bauteil (50) eine physikalisch-unklonbare Funktion, PUF (60), umfasst. Die Vorrichtung (100) umfasst einen Speicher (110) und eine Datenverarbeitungseinheit (120), wobei der Speicher (110) Anweisungen aufweist, die bei Ausführung auf der Datenverarbeitungseinheit (120) ausgebildet sind, Folgendes zu bewirken: Erzeugen (S110) einer digitalen Signatur (74) aus der PUF (60); und Authentifizieren (S120) des additiv-gefertigten Bauteils (50) durch ein Überprüfen der digitalen Signatur (74) über einen nicht-ersetzbaren Token, NFT (72).

## Beschreibung

Die vorliegende Erfindung bezieht sich auf eine Vorrichtung und ein Verfahren zum Authentifizieren eines additiv-gefertigten Bauteils und insbesondere auf ein Verfahren zur Integration von physikalisch-unklonbaren Funktionen (PUF) in der additiven Fertigung zur Authentifizierung in einer Blockchain (englisch für Blockkette).

### HINTERGRUND

Im Bereich der additiven Fertigung werden immer mehr Anwendungsfelder in einer Vielzahl unterschiedlicher Industrien erschlossen. Bei besonders schützenswerten Bauteilen, welche beispielsweise in der Rüstung, der Raumfahrt oder der Medizintechnik genutzt werden, besteht ein Bestreben dahingehend, die Produktionskette lückenlos nachvollziehen zu können.

Auch die Elektroindustrie hat das Potential der additiven Fertigung entdeckt und experimentiert bereits an bestimmten Anwendungsfällen. Erste Demonstrationen der Technologie zeigen ein erhebliches Potential für Leistungssteigerungen und Verbesserungen in der Funktionsintegration. So bestehen beispielsweise übliche Leiterplatinen aus mehreren Ebenen, deren vertikale Kontaktierungen zueinander einen erheblichen Widerstand in der Datenübertragung darstellen. Daher werden konventionelle Bauteile in der Regel nur auf Platinen in einer Ebene angeordnet. Der Einsatz von additiven Fertigungsverfahren ermöglicht nun eine freie Bahnführung im Raum durchzuführen, was einen erheblichen Vorteil in der Systemintegration darstellt. Zudem können Kondensatoren, Spulen, Wärmesenken direkt "gedruckt" werden bzw. andere Bauelemente können beim Druckprozess eingesetzt bzw. "umdruckt" werden. Auch die Trennung von Gehäuse und Platinen wird damit aufgehoben.

Diese Freiheit in den Fertigungsmöglichkeiten bringt jedoch Herausforderungen mit sich. Eine Herausforderung ist die Unterbindung von nichtautorisierten Kopien. Werden beispielsweise Steuerdateien für den 3D-Druck entwendet, können leistungsfähige Platinen, Bauteile oder Baugruppen nicht nur nachgebaut, sondern mit geringem Aufwand manipuliert und mit schadhaften Änderungen versehen werden. Gerade bei den hochwertigen Teilen, für die diese Art der Fertigung besonders geeignet ist, stellt dies ein realistisches Szenario mit hoher Schadenswirkung dar. Außerdem wird es im Zuge von Technologieprojekten, die unter dem Begriff "Industrie 4.0" zusammengefasst werden, leichter, Plagiate kostengünstig und mit teils geringem Aufwand herzustellen.

Um diesem Missstand entgegenzuwirken und die Herkunft eines Bauteils bzw. dessen Nutzungsrechte legitimieren zu können, bedarf es spezifischer Sicherheitsmerkmale. Diese Sicherheitsmerkmale können gleichzeitig eine technische Qualitätssicherung von additiv-gefertigten Bauteilen in der Elektroindustrie sicherstellen.

Für diese Sicherheit in der Informationstechnologie bestehen die folgenden grundsätzlichen Erfordernisse: (i) die Vertraulichkeit von Information soll gewahrt werden bzw. das Lesen und Modifizieren soll nur autorisierten Benutzern erlaubt sein; (ii) ist es wichtig, die Integrität der Information sicherzustellen, das heißt Daten dürfen nicht unbemerkt verändert werden; (iii) die Verfügbarkeit von Informationen ist ein wichtiger Aspekt, der möglichst sichergestellt sein soll.

Um diese Anforderungen zu erfüllen, gibt es bereits konventionelle Lösungen aus dem Bereich der Informationstechnologie. Diese Sicherheits- bzw. Identifizierungsmerkmale können beispielsweise über sogenannte physikalisch-unklonbare Funktionen (sogenannte Physical Unclonable Functions, PUF) in additiv-gefertigten Bauteilen im Herstellungsprozess eingebracht werden. Kostenintensive, sicherheitskritische und besonders schützenswerte Bauteile können hierdurch vor Missbrauch geschützt werden. Um hier ein hohes Maß an Sicherheit zu erreichen, sind genaue Messverfahren notwendig, um die PUF zuverlässig auszulesen. Messfehler führen hierbei zu fehlerhaften Identifizierungen. Außerdem lässt sich der technologische Fortschritt nur in einem zeitlich engen Rahmen vorhersagen, sodass die Funktionen mitunter schneller "klonbar" werden als gewünscht.

Weitere konventionelle Lösungen setzten in vielen Fällen Seriennummern voraus, die mit Sicherheitsfunktionen wie Prüfziffern und anderem versehen werden. Auch der Abgleich einer Seriennummer über ein Serversystem wird häufig zur Erhöhung der Sicherheit durchgeführt. Jedoch lässt sich auch eine Seriennummer mit geringem Aufwand fälschen und eine direkte Authentifikation ist somit nicht möglich. Vielmehr können Duplikate mit einfachen Mitteln hergestellt werden.

Daher besteht ein Bedarf nach weiteren Möglichkeiten, die Authentifizierung von Bauteilen durchzuführen bzw. weiter zu erhöhen.

### KURZBESCHREIBUNG DER ERFINDUNG

Zumindest ein Teil der eingangs erwähnten Probleme wird durch eine Vorrichtung und ein Verfahren zur Authentifizierung von additiv-gefertigten Bauteilen gemäß Anspruch 1 und Anspruch 11 gelöst. Die abhängigen Ansprüche beziehen sich auf weitere vorteilhafte Weiterbildungen der Gegenstände der unabhängigen Ansprüche.

Die vorliegende Erfindung bezieht sich auf eine Vorrichtung zum Authentifizieren eines additiv-gefertigten Bauteils, wobei das additiv-gefertigte Bauteil eine physikalisch-unklonbare Funktion, PUF, aufweist. Die Vorrichtung umfasst einen Speicher und eine Datenverarbeitungseinheit. Der Speicher umfasst Anweisungen, die bei Ausführung auf der Datenverarbeitungseinheit ausgebildet sind, Folgendes zu bewirken: Erzeugen einer digitalen Signatur aus der PUF; und Authentifizieren des additiv-gefertigten Bauteils durch ein Überprüfen der digitalen Signatur über einen nicht-ersetzbaren Token, NFT.

Die Vorrichtung ist somit ein Authentifikator, der die Echtheit des Bauteils überprüft. Das Bauteil kann insbesondere ein elektronisches Bauteil sein, dass eine bestimmte Funktion über eine elektronische Schaltung bereitstellt. Die Authentifizierung kann genutzt werden, um (nur) bei Bestätigung eine Aktivierung des Bauteils zu erlauben, ansonsten aber zumindest eine bestimmungsgemäße Funktion zu deaktivieren. Darüber hinaus können Nutzern bei positiver Authentifizierung weitere Vorteile gewährt werden (z.B. Updates, Services).

Der Begriff "nicht-ersetzbar" (englisch: "non-fungible") bedeutet, dass der Token (z.B. eine digitale Erkennungsmarke) nicht teilbar, kryptografisch eindeutig und überprüfbar ist. Es existiert somit immer genau ein solcher Token. Um das sicherzustellen, kann der Token in einer Blockchain (Blockkette) abgelegt werden, die zwar als Ganzes kopiert werden kann, aber einzelne Elemente innerhalb der Blockchain nicht manipulierbar sind.

Optional, sind die Anweisungen ausgebildet, um die digitale Signatur aus einer PUF-Messgröße (d.h. einer Messung an der PUF) zu erzeugen. Die PUF-Messgröße kann aus zumindest einer der folgenden Messungen ermittelt werden:
- eine Bildaufnahme von der PUF (z.B. ein Oberflächenbereich);
- Messen einer physikalischen Größe (z.B. Widerstandswert);
- Einlesen von Bilddaten oder Messdaten, die durch ein bildliches Erfassen der PUF oder durch ein Messen der physikalischen Größe ermittelt wurden;
- Messen einer Hochfrequenzeigenschaft (z.B. Resonanzfrequenz);
- Messen einer optischen oder spektralen Eigenschaft (z.B. ein Absorptionsspektrum oder eines Interferenzmusters).

Optional, ist der NFT mit der digitalen Signatur in einer Blockchain gespeichert und die Anweisungen in dem Speicher können dann weiter ausgebildet sein, um als Teil des Authentifizierens des Bauteils zumindest eines aus dem Folgenden zu bewirken:
Vergleichen der erzeugten digitale Signatur mit der im NFT gespeicherten digitalen Signatur; und
wenn das Vergleichen eine Übereinstimmung liefert, Aktivieren des Bauteils durch eine Speicherung eines Aktivierungscodes im Bauteil.

Insbesondere kann das Aktivieren nur dann erfolgen, wenn der Vergleich eine Übereinstimmung festgestellt hat. Da die digitale Signatur eindeutig ist, kann digitale Signatur selbst als Aktivierungskode genutzt werden. Es kann aber auch ein anderer Schlüssel genutzt werden.

Von der Blockchain können mehrere Kopien existieren, die verteilt auf verschiedenen Servern geführt werden, öffentlich zugänglich sind und zusätzlich zu dem NFT weitere Informationen zu den Nutzungsrechten im Rahmen von intelligenten Verträgen aufweisen kann, die als Computerprotokolle oder Programme in der Blockchain gespeichert sind. Optional wird das Aktivieren nur dann ausgeführt, wenn durch das Nutzen der Computerprotokolle oder Programme eine Zustimmung zu den Nutzungsrechten vorliegt.

Optional, umfasst die Vorrichtung weiter eine Netzwerkschnittstelle, die ausgebildet ist, um Informationen, die mit dem NFT verknüpft sind, herunterzuladen und/oder um den Aktivierungscode auf das Bauteil zu übertragen.

Die Vorrichtung selbst kann beispielsweise ein externer Computer oder ein mobiles Telekommunikationsgerät (Mobiltelefone, Tablet etc.) sein, welches nur über eine Netzwerkverbindung mit dem Bauteil verbunden ist. Die Netzwerkverbindung braucht auch nur temporär vorhanden sein, d.h. das Bauteil kann unabhängig von der Vorrichtung zum Authentifizieren existieren. Ebenso können mit der Vorrichtung zum Authentifizieren mehrere unabhängige oder verschiedene Bauteile authentifiziert bzw. aktiviert werden.

Ausführungsbeispiele beziehen sich auch auf ein additiv-gefertigtes Bauteil, das ausgebildet ist, um eine bestimmungsgemäße Funktion bereitzustellen und mittels der zuvor beschriebenen Vorrichtung authentifiziert werden kann. Das Bauteil umfasst eine physikalisch-unklonbare Funktion, PUF (engl. physical unclonable function), mit einer bauteilspezifischen eindeutigen PUF-Messgröße, der ein Aktivierungscode zugeordnet ist. Das Bauteil umfasst weiter eine Aktivierungseinheit, die ausgebildet ist, um die bestimmungsgemäße Funktion des Bauteils (nur) zu ermöglichen, wenn ein Aktivierungscode vorliegt.

Das Bauteil ist insbesondere ein elektronisches Bauteil, d.h. es umfasst im Allgemeinen aktive und/oder passive Komponenten, die selbst additiv gefertigt werden bzw. in eine additive gefertigte Komponente eingebettet sind (z.B. umdruckt werden). Passive Komponenten sind z.B. Widerstände, Kondensatoren, Induktivitäten und aktive Bauteile können z.B. Transistoren, Verstärker, Mikrocontroller sein. Es versteht sich, dass die PUF-Messgröße als Merkmal des Bauteils durch eine entsprechende (vorbestimmte) Messung ermittelt werden kann.

Optional, umfasst die Aktivierungseinheit einen Speicher für den Aktivierungscode und die Aktivierung kann durch ein Abspeichern des Aktivierungscodes bewirkt werden.

Optional, ist der Aktivierungscode mit einem nicht-ersetzbaren Token, NFT, aus der Blockchain verknüpft und kann eine digitale Signatur oder ein NFT-Schlüssel oder eine Kennung (ID) umfassen bzw. wird daraus abgeleitet. Zum Beispiel kann die digitale Signatur ein Hashwert (Streuwert) der PUF-Messgröße sein, die für zwei verschiedene PUF-Messgrößen unterschiedliche Hashwerte liefert.

Optional, ist die PUF eines oder mehr aus dem Folgenden:
- ein vorbestimmter Oberflächenabschnitt (z.B. markiert), für den andere Druckparameter bei der additiven Fertigung genutzt werden;
- ein gedruckter Abschnitt, bei dem der Drucker in einem Regime angesteuert wurde, welches zu keinen wiederholbaren Resultaten führt (z.B. in einer Auflösung oder mit einer Ansteuerung der Druckdüsen hergestellt wurde, für die der Drucker nicht vorgesehen ist und somit zu unvermeidbaren Artefakte führt);

- ein vorbestimmter elektrischer Widerstand;
- ein Gütefaktor oder eine Resonanzfrequenz eine Schwingkreises;
- ein vorbestimmter Fingerkondensator.

Optional, umfasst das Bauteil die zuvor beschriebene Vorrichtung zum Authentifizieren. Beide Komponenten können aber auch unabhängig voneinander sein.

Ausführungsbeispiele beziehen sich auch auf ein Verfahren zum Authentifizieren eines additiv-gefertigten Bauteils. Das Bauteil umfasst eine physikalisch-unklonbare Funktion, PUF, die das additiv-gefertigte Bauteil eindeutig identifiziert. Das Verfahren umfasst:
- Erzeugen einer digitalen Signatur aus der PUF; und
- Authentifizieren des additiv-gefertigten Bauteils durch ein Überprüfen der digitalen Signatur über einen nicht-ersetzbaren Token, NFT.

Optional, umfasst das Verfahren weiter:
- Vergleichen der erzeugten digitalen Signatur mit jener digitalen Signatur, die in dem NFT gespeichert ist;
- wenn das Vergleichen eine Übereinstimmung liefert, Aktivieren des Bauteils durch eine Speicherung eines Aktivierungscodes im Bauteil.

Optional, wird die digitale Signatur aus PUF-Messgrößen basierend auf zumindest einer der folgenden Messungen an der PUF erzeugt:
- eine optische Messung,
- eine Widerstandsmessung,
- eine Impedanzmessung,
- eine Bildaufnahme,
- eine spektrale Messung,
- eine Frequenzmessung,
- eine Messung einer Güte eines Schwingkreises,
- eine Messung einer anderen physikalischen Größe.

Dieses Verfahren oder zumindest Teile davon kann/können ebenfalls in Form von Anweisungen in Software oder auf einem Computerprogrammprodukt implementiert oder gespeichert sein, wobei gespeicherte Anweisungen in der Lage sind, die Schritte nach dem Verfahren auszuführen, wenn das Verfahren auf einem Prozessor läuft. Daher bezieht sich die vorliegende Erfindung ebenfalls auf ein Computerprogrammprodukt und/oder ein Computer-lesbares Speichermedium mit darauf gespeichertem Software-Code (Softwareanweisungen), der ausgebildet ist, um eines der zuvor beschriebenen Verfahren auszuführen, wenn der Software-Code durch eine Verarbeitungseinheit ausgeführt wird. Die Verarbeitungseinheit kann jede Form von Computer oder Steuereinheit sein, die einen entsprechenden Mikroprozessor aufweist, der einen Software-Code ausführen kann.

Ausführungsbeispiele lösen somit die eingangs erwähnten Probleme durch ein Authentifizierungsverfahren für additiv-gefertigte Bauteile, welches höchsten bekannten Sicherheitsstandards entspricht. Hierzu werden die obengenannten Probleme durch eine Kombination von zwei verschiedenen Aspekten: (i) Nutzung einer physikalisch-unklonbaren Funktion und (ii) Verwendung von nicht-ersetzbaren Token (Non-fungible Token, NFT) aus dem Bereich von Kryptowährungen. Damit wird es möglich, zufällige Fertigungsabweichungen zu erfassen und beispielsweise in einen Hash-Wert umzurechnen und diesen in einer Blockchain mittels NFTs abzulegen. Zur Authentifizierung bzw. vor Nutzungsfreigabe, wird der Besitz des Tokens über die Blockchain bestätigt. Beispielsweise kann nur dann die Nutzung des Bauteiles erfolgen. Außerdem können weitere Informationen zu den Nutzungsrechten im Rahmen von Smart Contracts (intelligenten Verträgen oder Computerprotokolle, die Verträge abbilden) hinzugefügt werden.

Im Rahmen von additiv-gefertigten Bauteilen können PUFs beispielsweise durch Druckabweichungen realisiert werden, wobei die Druckabweichungen deutlich unterhalb einer Auflösungsgrenze des Druckers auftreten und zufällig entstehen. Solange man sich auf der Höhe einer gewissen technologischen Leistungsfähigkeit bewegt bzw. es keine Technologie gibt, die diese kleineren Dimensionen der Formgebung nachbilden kann, ist ein Kopieren - wenn überhaupt - nur mit enormem Aufwand möglich. Ausführungsbeispiele kombinieren die bereits hohe Sicherheit von PUFs mit einer NFT-Verifizierung. Damit kann ein Höchstmaß Sicherheit innerhalb kurzer Zeit erreicht werden.

Ausführungsbeispiele der vorliegenden Erfindung bieten die folgenden Vorteile:
- Eine Herkunft des Bauteils lässt sich eindeutig in der Blockchain nachvollziehen bzw. über die Blockchain bestimmen.
- Diese bietet eine Fälschungssicherheit für ein additiv-gefertigtes Bauteil, welches beispielsweise mit einem Multijet-3D-Druck hergestellt wird.
- Die Qualitätssicherung wird deutlich verbessert.
- Die Eindeutigkeit des Bauteiles wird innerhalb der Blockchain transparent nachvollziehbar sein.
- Unverwechselbare PUFs erschweren Plagiate erheblich und gewährleisten für kritische Bauteile eine besondere Form der Qualitätssicherung.
- Damit überwinden Ausführungsbeispiele die Nachteile von konventionellen Lösungen, bei denen eine Programmierung dieser Schaltelemente manipuliert werden kann.
- Außerdem können bei konventionellen Systemen die Server der Authentifizierungssysteme angegriffen und die dort hinterlegten Daten in Datenbanken manipuliert werden. Eine solche Manipulation ist bei Ausführungsbeispielen ausgeschlossen, da die genutzte PUF bauteilspezifisch ist und nur ein einziges Mal auftritt (ähnlich einen Fingerabdruck oder anderen eindeutigen Identifizierungsmöglichkeiten).
- Außerdem ist es im Gegensatz zu konventionellen Verfahren nicht möglich, Seriennummer oder QR-Codes zu fälschen bzw. physische Kopien davon anzufertigen und diese in Datenbanken abzulegen bzw. von dort zu entwenden.

### KURZBESCHREIBUNG DER FIGUREN

Die Ausführungsbeispiele der vorliegenden Erfindung werden besser verstanden anhand der folgenden detaillierten Beschreibung und den beiliegenden Zeichnungen der unterschiedlichen Ausführungsbeispiele, die jedoch nicht so verstanden werden sollten, dass sie die Offenbarung auf die spezifischen Ausführungsformen einschränken, sondern lediglich der Erklärung und dem Verständnis dienen.
- Fig. 1: veranschaulicht schematisch eine Vorrichtung zum Authentifizieren eines additiv-gefertigten Bauteils gemäß einem Ausführungsbeispiel der vorliegenden Erfindung.
- Fig. 2: zeigt schematisch ein Flussdiagram für ein Verfahren zum Authentifizieren eines additiv-gefertigten Bauteils gemäß einem Ausführungsbeispiel.
- Fig. 3A, 3B: zeigen ein Ausführungsbeispiel, wie durch Abweichungen im additiven Fertigungsprozess des Bauteils eine PUF als Druckabweichungen realisiert werden kann.
- Fig. 4A, 4B: zeigen Ansichten auf einen beispielhaften Abschnitt des Bauteiles, der gemäß einem Ausführungsbeispielen zur Identifizierung nutzbar ist.

### DETAILLIERTE BESCHREIBUNG

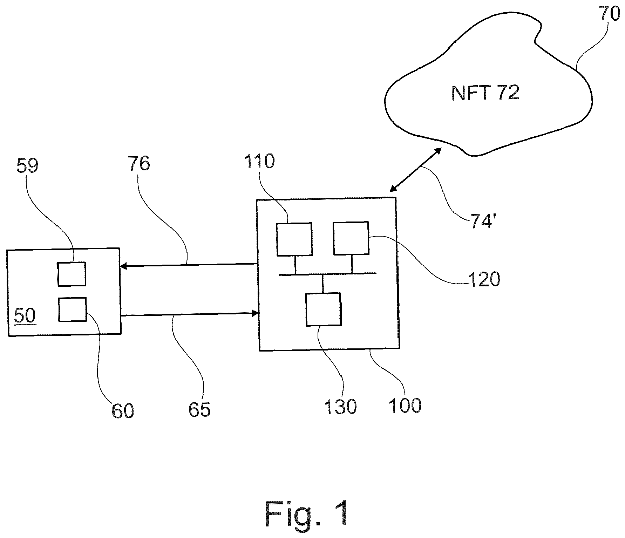

**Fig. 1** veranschaulicht schematisch eine Vorrichtung 100 zum Authentifizieren (ein sogenannter Authentifikator) eines additiv-gefertigten Bauteiles 50. Das additiv-gefertigte Bauteil 50 umfasst eine physikalisch-unklonbare Funktion 60 (PUF), die spezifisch für das Bauteil 50 ist und sich von Bauteil zu Bauteil unterscheidet. Die PUF 60 kann eine bestimmte Charakteristik des Bauteils sein, wie beispielsweise ein Fingerabdruck durch einen Oberflächenbereich, eine elektrische oder magnetische Eigenschaft, eine optische Eigenschaft, ein Frequenzverhalten etc. Die PUF 60 kann sich auf beliebige physikalische Eigenschaft beziehen, die das Bauteil 50 eindeutig spezifizieren.

Die Vorrichtung 100 umfasst zumindest einen Speicher 110 und eine Datenverarbeitungseinheit 120. Optional kann die Vorrichtung 100 auch eine Netzwerkschnittstelle 130 aufweisen, um Daten zu empfangen und zu senden. Der Speicher 110 kann beispielsweise Anweisungen aufweisen, die ausgebildet sind, um bestimmte Funktionen bei Ausführung bereitzustellen. Außerdem kann der Speicher 110 weitere Daten abspeichern.

Die Datenverarbeitungseinheit 120 ist ausgebildet, um die Anweisungen (Programme) aus dem Speicher 110 auszuführen, um beispielsweise eine digitale Signatur 74, die der PUF 60 (eindeutig) zugeordnet ist, zu erzeugen oder bereitzustellen. Hierzu kann eine PUF-Messgröße 65 von dem Bauteil 50 bereitgestellt werden (z.B. als ein Bild oder als Messwert). Die PUF-Messgröße 65 kann aber auch durch eine explizite Messung erzeugt werden (z.B. eine vorbestimmte elektrische, magnetische und/oder optische Messung). Die digitale Signatur 74 kann beispielsweise ein Hash-Wert des PUF-Messgröße 65 sein, es kann aber auch ein numerischer Wert der vorgenommenen Messung sein (z.B. eine Resonanzfrequenz, eine optische Frequenz, eine Impedanz).

Außerdem ist die Datenverarbeitungseinheit 120 ausgebildet, um eine Authentifizierung des Bauteils 50 durchzuführen. Diese Authentifizierung basiert auf einem nicht-ersetzbaren Token 72 (englisch: non-fungible token, NFT), der in einer Blockchain 70 gespeichert sein kann. Die Blockchain 70 (englisch für Blocckette) ist eine kontinuierlich erweiterbare Liste von Datensätzen in einzelnen Blöcken, wobei neue Blöcke in einem Konsensverfahren erstellt und mittels kryptographischer Verfahren an eine bestehende Kette angehängt. Jeder Block kann einen kryptographisch sicheren Wert (z.B. Hash oder Streuwert) des vorhergehenden Blocks, einen Zeitstempel und/oder Transaktionsdaten umfassen. Transaktionen können beispielsweise eine Weitergabe oder Verkauf oder Lizensierung des Bauteils 50 sein, sodass die neuen Nutzungsrechte entsprechend protokolliert werden können. Spätere Transaktionen bauen auf frühere Transaktionen auf und überprüfen diese auf Richtigkeit. Es ist eine verteilt-geführte Kontobuchtechnologie, die für jedermann einsehbar und überprüfbar ist. Da sehr viele Kopien der Blockchain 70 existieren und jede Änderung für jedermann einsehbar ist, sind Manipulationen der Blockchain 70 praktisch ausgeschlossen.

Gemäß Ausführungsbeispielen wird der NFT 72 über Smart Contracts (intelligente Verträge) verwaltet, die beispielsweise als Computerprotokoll oder ein Programm realisiert sein können. Der NFT 72 kann beispielsweise einen Verweis auf digitale Informationen über das Bauteil 50 (z.B. die PUF-Messgröße 65) enthalten, die auf einem separaten Server gespeichert sein können. Die PUF-Messgröße 65 braucht nicht selber in der NFT 72 gespeichert sein, aber z.B. ein Hashwert oder eine Prüfsumme davon, der zur Authentifizierung nutzbar ist. Der im NFT 72 enthaltene Verweis kann beispielsweise auf Bilddaten oder Text-Dokumente verweisen, aus denen hervorgeht, um welches Bauteil 50 es sich handelt. Dort können auch weitere Informationen zu dem Bauteil 50 abrufbar sein (z.B. Hersteller, Datum der Herstellung, technische Daten und anderes mehr).

Gemäß Ausführungsbeispielen vergleicht die Datenverarbeitungseinheit 120 zum Beispiel die digitalen Signatur 74 mit dem NFT 72 (oder mit einem dazugehöriger NFT-Schlüssel 74'). Basierend auf diesem Vergleich kann die Datenverarbeitungseinheit 120 eine Authentifizierung des Bauteils 50 durchführen. Wenn der Vergleich positiv verläuft kann die Datenverarbeitungseinheit 120 einen Aktivierungscode 76 bereitzustellen. Der Aktivierungscode 76 kann beispielsweise an das Bauteil 50 übertragen werden und zu einer Aktivierung des Bauteils 50 genutzt werden. So kann das Bauteil 50 bestimmungsgemäß nur mit einem gültigen Aktivierungscode 76 in Betrieb genommen werden.

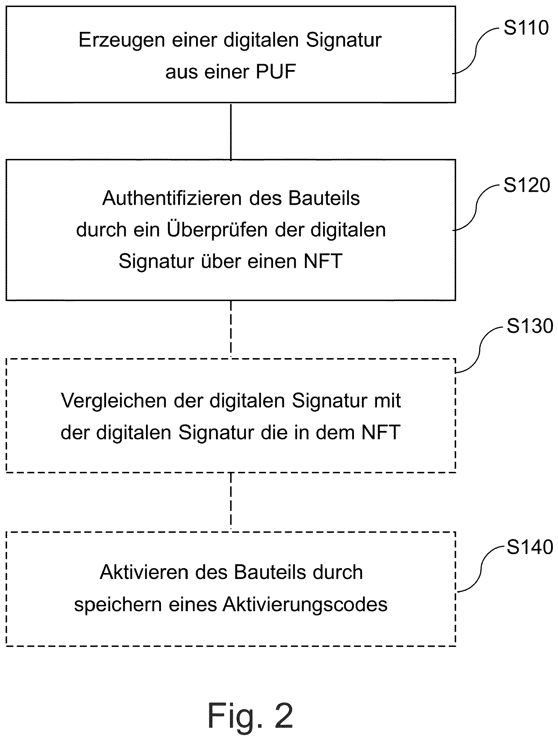

**Fig. 2** zeigt schematisch ein Flussdiagram für ein Verfahren zum Authentifizieren eines additiv-gefertigten Bauteiles. Das Verfahren umfasst die folgenden Schritte:
- Erzeugen S110 einer digitalen Signatur 74 aus der PUF 60 (bzw. basierend auf PUF-Messdaten); und
- Authentifizieren S120 des additiv-gefertigten Bauteils 50 durch ein Überprüfen der digitalen Signatur 74 über einen nicht-ersetzbaren Token 72, NFT.

Optional umfasst das Verfahren weiter die Schritte (in Fig. 2 gestrichelt dargestellt):
- Vergleichen S130 der erzeugten digitalen Signatur 74 mit einer digitalen Signatur 74', die in dem NFT 72 gespeichert ist;
- wenn das Vergleichen S140 eine Übereinstimmung liefert, Aktivieren S140 des Bauteils 50 durch eine Speicherung eines Aktivierungscodes 76 im Bauteil 50.

Gemäß Ausführungsbeispielen können alle Funktionen der Authentifizierungsvorrichtung 100 als weitere optionale Verfahrensschritte ausgeführt werden.

Ein beispielhafter Verfahrensablauf zur Verwendung einer gedruckten PUF 60 unter Verwendung von NFTs 70 kann gemäß Ausführungsbeispielen wie folgt geschehen:
- Zunächst kann ein bestehendes Design eines additiv-gefertigten Bauteiles 50 mit einem individuell zugewiesenen Auswertebereich versehen werden, der für die PUF 60 genutzt werden kann. Dies kann beispielsweise eine Oberfläche des Bauteils 50 sein oder ein anderes Detail, welches klar definiert ist und für das Auslesen der PUF 60 verwendet werden kann. Es kann sich auch um einen Bereich für eine Messung handeln, sodass entsprechende Sensordaten als PUF 60 genutzt werden können.
- Danach wird im Druckprozess das Design hergestellt, wodurch sich die PUF 60 innerhalb eines multimedialen Auswertebereichs entsteht.
- Anschließend kann eine einzigartige Kennung (ID) als digitale Signatur 74 aus den PUF-Messdaten 65 bzw. PUF-Analysedaten generiert werden. Diese Kennungen 74 können auf verschiedenartige Weise ermittelt werden. Beispielsweise können hierzu optische, mechanische, elektrische, Hochfrequenzeigenschaften und/oder Anderes genutzt werden, um über entsprechende Messungen oder Analysen eine Kennung 74 zu generieren.
- Die ID 74 kann dann gespeichert werden und es erfolgt eine Zuweisung als NFT 72. Beispielsweise braucht die einzigartige Kennung 74 nur beim Besitzer der Hardware vorhanden zu sein.
- Schließlich kann die Aktivierung des Designs oder Bauteils 50 unter Eingabe der einzigartigen Kennung 74 als Aktivierungscode 76 erfolgen. Das additiv-gefertigte Bauteil 50 (gedruckter Hardware) mit der verifizierten PUF 60 kann außerdem über eine digitale Speicherfunktion verfügen, in der der Aktivierungscode 76 gespeichert werden kann. Gemäß Ausführungsbeispielen kann der NFT-Schlüssel 74 selbst als Aktivierungscode 76 zur Aktivierung des Bauteils 50 verwendet werden, muss aber nicht. Es kann ein anderer gültiger Code generiert werden.

Gemäß Ausführungsbeispielen kann die PUF 60 auf verschiedenste Art realisiert werden. Beispielsweise kann ein digitales Bild von einer vorbestimmten Oberfläche in einer bestimmten Auflösung erzeugt werden und dann ein Fingerabdruck für diese Oberfläche ermittelt werden. Ebenso ist es möglich, bestimmte elektrische Messungen an vorbestimmten Punkten durchzuführen, die beispielsweise eine Widerstandsmessung oder kapazitive oder induktive Messung umfassen können. Bei einem genauen Messvorgang liefert auch dies ein bauteilspezifisches Kennzeichen. Weiterhin ist es möglich, Hochfrequenzeigenschaften wie Resonanzfrequenzen o.Ä. zu messen. Zum Beispiel befinden sich in nahezu jedem Bauteil (parasitäre) Kapazitäten und/oder Induktivitäten, die Resonanzen verursachen und messbar sind. Solche Resonanzen können sehr genau gemessen werden und sind als Kennung sehr gut geeignet.

Das Verfahren oder zumindest einige Schritte davon können ebenfalls Computer-implementiert sein, d.h. es kann durch Anweisungen umgesetzt sein, die auf einem Speichermedium gespeichert sind und in der Lage sind, die Schritte des Verfahrens auszuführen, wenn es auf einem Prozessor läuft. Die Anweisungen umfassen typischerweise eine oder mehrere Anweisungen, die auf unterschiedliche Art auf unterschiedlichen Medien in oder peripher zu einer Authentifizierungsvorrichtung 100 (mit einem Prozessor) gespeichert sein können, die, wenn sie gelesen und durch die Vorrichtung ausgeführt werden, die Vorrichtung 100 dazu veranlassen, Funktionen, Funktionalitäten und Operationen auszuführen, die zum Ausführen eines Verfahrens gemäß der vorliegenden Erfindung notwendig sind.

Es versteht sich, dass alle zuvor beschriebenen Funktionen der Vorrichtung 100 als weitere optionale Verfahrensschritte ausgebildet sein können. Außerdem versteht es sich, dass die Reihenfolge der Nennung nicht notwendigerweise eine Reihenfolge bei der Ausführung der Verfahrensschritte ist. Die Schritte können auch in einer anderen Reihenfolge ausgeführt werden bzw. es wird nur ein Teil der Verfahrensschritte ausgeführt

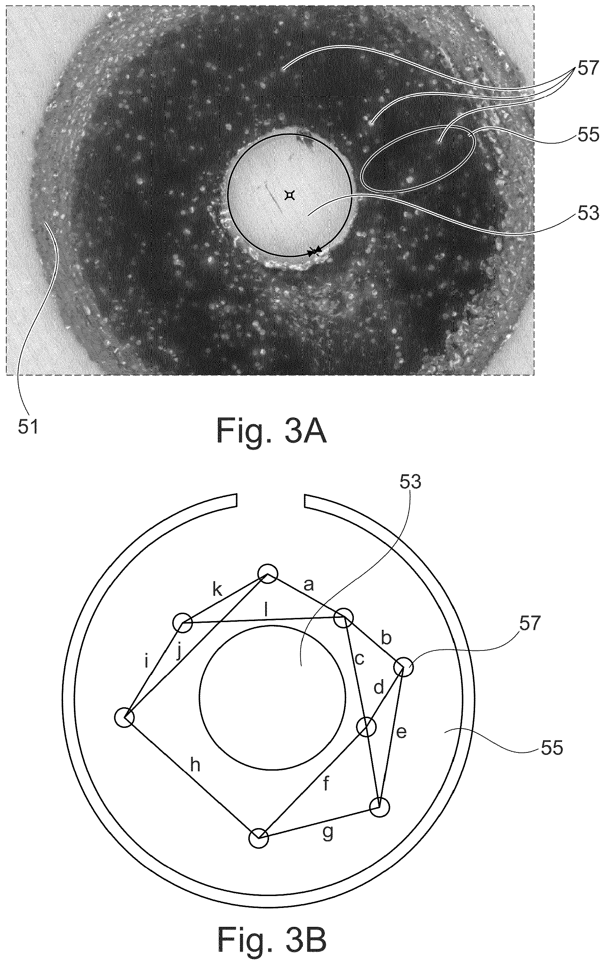

**Fig. 3A** und **3B** zeigen ein Ausführungsbeispiel, wie durch Abweichungen im additiven Fertigungsprozess des Bauteils 50 eine PUF 60 als Druckabweichungen realisiert werden kann. Für die additive Fertigung kann beispielsweise der Tintenstrahldruck (multi-jet 3D-Druck) mit verschiedenen Tinten oder Pasten genutzt werden. Die Tinten/Pasten werden mehreren Düsen aufgebracht und gehärtet, wobei elektrisch-leitfähige und nichtleitfähige (dielektrische) Tinten/Pasten zum Einsatz kommen, um eine 3-dimensionale Schaltung herzustellen. Passive Bauteile wie Widerstände, Kondensatoren, Induktivitäten können direkt aus dem leitfähigen Material gedruckt werden.

In diesem Druckprozess kann es jedoch zu einem sogenannten Spray-Effekt kommen, bei dem leitfähiges Material als kleine Einschlüsse in dielektrischem Material eingebettet wird. Da die Konzentration relativ gering ist, werden dadurch die elektrischen Eigenschaften nicht beeinträchtig bzw. sind im normalen Betrieb nicht feststellbar.

**Fig. 3A** veranschaulicht diesen Spray-Effekt. Beispielhaft ist eine leitfähiger kern 53 durch eine Isolationsschicht 55 umhüllt. In der Isolationsschicht 55 befinden sich Einschlüsse 57 aus leitfähigem Material, die sich zufällig in der Isolationsschicht 55 verteilen. Die Einschlüsse 57 sind durch den Spray-Effekt entstanden, d.h. beim Auftragen des leitfähigen Materials sind kleine Partikel in den Bereich der Isolationsschicht 55 "gesprüht" worden, die dann durch dielektrischen Material 55 umhüllt werden. Da das dielektrischen Material 55 für Licht einer bestimmten Wellenlänge zumindest teilweise transparent ist, sind die Einschlüsse 57 (leitfähigen Partikel) seht gut sichtbar bzw. können gezielt detektiert werden. Beispielsweise zeigt das leitfähige Material der Einschlüsse 57 sehr gut Reflexionseigenschaften bzw. lassen kein elektro-magnetische Strahlung durch, wodurch sie sehr gut sichtbar gemacht werden können.

Das gezeigte Bauteil 50 kann beispielsweise ein Koaxialkabel sein, d.h. ein Kern 53 ist mit einer dielektrischen Umhüllung 55 umschlossen und abschließend ist ein leitfähigen Mantel 51 ausgebildet.

**Fig. 3B** veranschaulicht eine mögliche Vermessung und Kodierung der Einschlüsse 57, um sie gemäß Ausführungsbeispielen für eine Implementierung einer PUF 60 zu nutzen. Die Einschlüsse 57 verteilen sich um den leitfähiger Kern 53 herum und sind innerhalb des leitfähigen Mantels 51 zufällig angeordnet. Die Einschlüsse 57 sind in der Isolationsschicht 55 eingebettet.

Gemäß Ausführungsbeispielen wird zunächst ein Satz von relevanten Einschlüsse 57 definiert, die für die Kodierung genutzt werden sollen. Dies können beispielsweise alle Einschlüsse mit einer Mindesthelligkeit im Bild und/oder einer Mindestgröße sein (z.B. die 8 hellsten oder 8 größten Einschlüsse 57). Alle anderen Einschlüsse können beispielsweise ignoriert werden (herausgefiltert werden). Das zufällig entstandene Muster kann beispielsweise wie folgt kodiert werden. Zu jedem Einschluss 57 werden mehrere Abständen a, b, c, ... zu anderen Einschlüssen 57 aus dem Satz ermittelt, wobei die Abstände sich auf Verbindungslinien beziehen, die weder einen anderen Einschluss kreuzen noch den Kern 53 berühren, wobei jeder Einschluss 57 aus dem Satz mit einer vorbestimmten Größe gezeichnet werden kann.

Auf diese Weise ist es möglich, verschiedene Umfangslängen von Umrundungen um den Kern 53 zu definieren, die sich von Einschluss 57 zu Einschluss 57 erstrecken, ohne den leitfähigen Kern 59 zu berühren. Zur eindeutigen Kodierung des Spraymusters aus der Fig. 3A können verschiedene Größen genutzt werden: maximale Umfangslänge, minimale Umfangslänge, alle Längen der Größe nach geordnet, Verhältnisse von verschiedenen Längen, Längendifferenzen etc. Ebenso könnten alle Koordinaten in Bezug auf der Mitte des Kerns 53 zur Kodierung genutzt werden.

Ausführungsbeispiele nutzen somit die im Druckprozess auftretenden Artefakte (zufällige Schmutzeffekte), die aber die Funktionalität des eigentlichen Bauteils 50 nicht beeinträchtigen. Diese Schmutzeffekte oder Spray-Effekte können optisch sowohl in der Ebene in zwei Dimensionen (siehe Fig. 3B) als auch im dreidimensionalen Raum analysiert werden.

Es versteht sich, dass - ähnlich zu einem Röntgenbild - zur Erfassung der Einschlüsse 57 kein Zerstören des Bauteiles notwendig ist, da die dielektrische Struktur 55 eine gewisse Transparenz hinsichtlich zumindest einer Wellenlänge besitzt, die zur optischen Analyse genutzt werden kann. Anderseits weisen die Einschlüsse 57 keine oder kaum eine Transparenz für elektromagnetische Wellen auf, da sie leitfähig sind (z.B. ein metallisches Material wie Silber aufweisen).

Auf diese Weise kann eine dreidimensionale räumliche Verteilung der Einschlüsse 57 digital erfasst werden.

Gemäß weiteren Ausführungsbeispielen werden Druckabweichungen als PUF 60 genutzt, bei denen die Auswertung auf der Oberfläche des Bauteils 50 erfolgt. Hierzu wird zumindest ein Bereich definiert, der sich auf einer bestimmten Position auf dem Bauteil 50 befindet und mikroskopisch untersucht werden kann. Beispielsweise kann hierzu die Oberflächentopografie untersucht werden. Die Oberflächentopografie entsteht ebenfalls zufällig und stellt einen einzigartigen Fingerabdruck des Bauteiles 50 dar. Mittels Verfahren, wie sie ebenfalls zur Gesichtserkennung bekannt sind, wird damit eine eindeutige Identifikation des Bauteiles möglich.

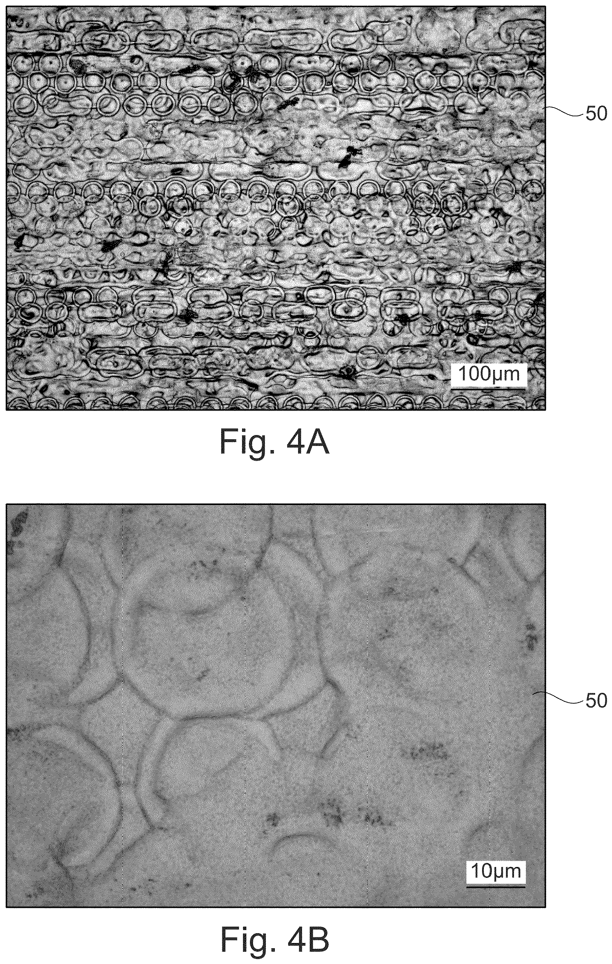

**Fig. 4A** zeigt beispielsweise eine vergrößerte Ansicht auf einen beispielhaften Abschnitt des Bauteiles 50, der zur Identifizierung nutzbar ist. Der beispielhafte Größenmaßstab beträgt hier 100 11m, so dass der gezeigte Abschnitt des Bauteils 50 eine Abmessung - von 1 × 1 mm hat.

**Fig. 4B** darunter zeigt eine Detailansicht, die die Oberflächentopografie des additive gefertigten Bauteils 50 genauer veranschaulicht. Die dort gezeigten Kreise entstehen durch den 3D-Druckprozess durch das Aufbringen von Material durch Düsen. Die Verteilung der Oberflächenstruktur ist dabei zufällig und ändert sich von Bauteil zu Bauteil. Der Maßstab für diese Ansicht beträgt 10 µm, so dass die Gesamtansicht eine Größe von ca. 100 µm x 100 µm hat.

Die Fig. 4A und Fig. 4B zeigen beispielsweise die Oberfläche eines leitfähigen Bereiches einer additiv-gefertigten Struktur in verschiedenen Vergrößerungsstufen (Skala 100 µm in Fig. 4A und Skala 10 µm in Fig. 4B). Das Muster entsteht durch zufällige Abweichungen, wie sie beispielsweise von Düsen entstehen können, die für kurze Zeit auch mal verstopft sein können bzw. nicht immer den absolut gleichen Materialauftrag gewährleisten. Ähnlich einem menschlichen Fingerabdruck lassen sich die Muster nur mit sehr hohem Aufwand reproduzieren (die z.B. den Wert des Bauteiles 50 um Vielfaches überschreiten).

Die Möglichkeiten PUFs 60 zu realisieren sind vielfältig. Beispielsweise ist es gemäß weiteren Ausführungsbeispielen möglich, die PUF 60 in Bezug auf Abweichungen in den Materialeigenschaften zu definieren. Beispielsweise treten in einem Druckprozess Toleranzschwankungen hinsichtlich des (Ohm'schen) Widerstandes bei der Herstellung von leitfähigen Strukturen eines elektrischen Schaltung auf, d.h. jede Leitung hat einen leicht anderen elektrischen Widerstand. Diese Schwankungen in dem elektrischen Widerstand können elektrisch gemessen werden. Hierzu kann der ohmsche Widerstand selbst gemessen werden oder auch eine Signallaufzeit gemessen werden. Die Signallaufzeit kann beispielsweise mittels einer Überlagerung von zwei Wechselstromsignalen entlang unterschiedlicher Wege ermittelt werden. Die unterschiedlichen Laufzeiten führen zu Phasenverschiebungen, die z.B. als Interferenz oder im Differenzsignal genau messbar sind.

Bei weiteren Ausführungsbeispielen kann die PUF 60 hinsichtlich eines passiven elektrischen Schwingkreises (RLC-Kombination) gemessen werden. Die leichten Fertigungsschwankungen in den Werten für den Widerstand R, der Kapazität C bzw. der Induktivität L führen zu verschiedenen Resonanzfrequenzen. Da der resistive Anteil R im Schwingkreis aber auch der kapazitive oder induktive Anteil als gedruckte Leitung vorliegt und infolge des Druckprozesses den oben genannten Toleranzschwankungen unterliegt, ist der Gütefaktor Q des Schwingkreises dadurch stark beeinflusst. Dieser kann dann mit hochfrequenztechnischen Mitteln analysiert werden und bietet eine hohe Genauigkeit - zumindest, wenn entsprechend angepasste Frequenzen für das Bauteil genutzt werden.

Gemäß weiterer Ausführungsbeispielen ist es ebenfalls möglich, die PUF 60 durch absichtlich provozierte Fertigungsabweichungen zu erzeugen. Dieses Verfahren basiert darauf, dass jedes der oben genannten Merkmale durch absichtlich schlechtere Druckparameter oder durch absichtlich ungeeignete Designs (zum Beispiel Merkmale unterhalb der Auflösungsgrenze) an vorher ausgewählten Stellen ausgelöst werden können. Diese absichtliche Ansteuerung entsprechend zu nicht-druckbaren Strukturen können insbesondere dort ausgebildet werden, wo sie für den normalen Betrieb nicht störend sind. Ausführungsbeispiele nutzen hierfür beispielsweise schlechte Druckparameter. So kann beispielsweise eine (elektrische oder mechanische) Spannung eines Piezoelementes im Druckkopf derart eingestellt werden, dass der Druckkopf durch entsprechende Änderungen in der Software während des Druckprozesses zu Überextrusion (zu hohe Werte) und einem verstärkten Spray-Effekt führt (siehe Fig. 3A, 3B).

Gemäß Ausführungsbeispielen können provozierte Merkmale durch Designelemente beispielsweise durch einen Fingerkondensator mit einem Abstand der Fingerkontakte unterhalb der Druckauflösung dienen. Im Druckprozess entsteht dann ein zufälliges Muster aus kontaktierten und nicht-kontaktierten Leitungen. Diese Fingerkontakte können sowohl optisch als auch elektrisch analysiert werden, zum Beispiel durch ein abwechselndes Öffnung und Schließen einer Stromversorgung an den Fingerkontakten. Die speicherbare Ladungsmenge ist durch das zufällige Muster bestimmt.

Gemäß Ausführungsbeispielen kann das zugrunde gelegte dreidimensionale Design bekannt sein, wobei elektrischen Funktionalitäten durch mögliche Realisierungsartefakte im Druckprozess zufällig beeinträchtigt sein können. Die gemessene elektrische Funktion ist das messbare Resultat aus Design und Druckabweichung.

Ausführungsbeispielen bieten den Vorteil, dass aus diesen nicht-kopierbaren Marken oder Kennzeichen (d.h. aus der PUF 60) eine digitale Kennung 74 (ID) generiert wird, die nach Ablage als NFT 72 in einer Blockchain 70 nur schwer bzw. gar nicht manipuliert werden kann. Zum einen kann die PUF 60 selber nicht erzeugt werden und zum anderen kann der NFT 72 nicht manipuliert werden. Die Authentifizierung ist damit erheblich fälschungssicherer.

Die in der Beschreibung, den Ansprüchen und den Figuren offenbarten Merkmale der Erfindung können sowohl einzeln als auch in beliebiger Kombination für die Verwirklichung der Erfindung wesentlich sein.

### BEZUGSZEICHENLISTE

- 50: additiv-gefertigten (elektronisches) Bauteils
- 51: leitfähiger Mantel
- 53: leitfähiger Kern
- 55: Isolationsschicht
- 57: Einschlüsse
- 59: Aktivierungseinheit
- 60: physikalisch-unklonbare Funktion (PUF)
- 65: PUF-Messgröße
- 70: Blockchain
- 72: nicht-ersetzbarer Token (NFT) auf der Blockchain
- 74: erzeugte digitale Signatur (von PUF-Messgröße)
- 74': gespeicherte digitale Signatur (in NFT)
- 76: Aktivierungscode
- 100: Vorrichtung zum Authentifizieren (Authentifikator)
- 110: Speicher
- 120: Datenverarbeitungseinheit
- 130: Netzwerkschnittstelle

## Patentansprüche

1. Eine Vorrichtung (100) zum Authentifizieren eines additiv-gefertigten Bauteils (50), wobei das additiv-gefertigte Bauteil (50) eine physikalisch-unklonbare Funktion, PUF (60), aufweist und die Vorrichtung (100) einen Speicher (110) und eine Datenverarbeitungseinheit (120) umfasst, wobei der Speicher (110) Anweisungen aufweist, die bei Ausführung auf der Datenverarbeitungseinheit (120) ausgebildet sind, Folgendes zu bewirken:
Erzeugen (S110) einer digitalen Signatur (74) aus der PUF (60); und
Authentifizieren (S120) des additiv-gefertigten Bauteils (50) durch ein Überprüfen der digitalen Signatur (74) über einen nicht-ersetzbaren Token, NFT (72).

2. Die Vorrichtung (100) nach Anspruch 1 wobei die Anweisungen ausgebildet sind, um die digitale Signatur (74) aus einer PUF-Messgröße (65) zu erzeugen, wobei die PUF-Messgröße (65) mit zumindest einer der folgenden Messungen verknüpft ist:
- Auslösen einer Bildaufnahme der PUF (60);
- Messen einer physikalischen Größe;
- Einlesen von Bilddaten oder Messdaten, die durch ein bildliches Erfassen der PUF (60) oder durch ein Messen einer physikalischen Größe ermittelt wurden;
- Messen einer Hochfrequenzeigenschaft;
- Messen einer optischen oder spektralen Eigenschaft.

3. Die Vorrichtung (100) nach Anspruch 1 oder Anspruch 2, wobei der NFT (72) mit der digitalen Signatur (74') in einer Blockchain (70) gespeichert ist und die Anweisungen in dem Speicher (110) weiter ausgebildet sind, um als Teil des Authentifizierens (S120) des Bauteils (50) zumindest eines aus dem Folgenden zu bewirken:
Vergleichen (S130) der erzeugten digitalen Signatur (74) mit der im NFT (72) gespeicherten digitalen Signatur (74'); und
wenn das Vergleichen (S130) eine Übereinstimmung liefert, Aktivieren (S140) des Bauteils (50) durch eine Speicherung eines Aktivierungscodes (76) im Bauteil (50).

4. Die Vorrichtung (100) nach Anspruch 3, wobei von der Blockchain (70) mehrere Kopien existieren, die verteilt auf verschiedenen Servern geführt werden, öffentlich zugänglich sind und zusätzlich zu dem NFT (72) weitere Informationen zu den Nutzungsrechten im Rahmen von intelligenten Verträgen aufweisen, die als Computerprotokolle oder Programme in der Blockchain (70) gespeichert sind,
und wobei das Aktivieren (S140) nur dann ausgeführt wird, wenn durch das Nutzen der Computerprotokolle eine Zustimmung zu den Nutzungsrechten vorliegt.

5. Die Vorrichtung (100) nach Anspruch 3 oder Anspruch 4, wobei die Vorrichtung (100) weiter eine Netzwerkschnittstelle (130) aufweist, die ausgebildet ist, um Informationen, die mit dem NFT (72) verknüpft sind, herunterzuladen und um den Aktivierungscode (76) auf das Bauteil (50) zu übertragen.

6. Ein additiv-gefertigtes Bauteil (50), das ausgebildet ist, um eine bestimmungsgemäße Funktion bereitzustellen und mittels einer Vorrichtung (100) nach einem der Ansprüche 1 bis 5 zu authentifizieren, das Bauteil (50) umfasst:
eine physikalisch-unklonbare Funktion, PUF (60), mit einer bauteilspezifischen eindeutigen PUF-Messgröße (65), der ein Aktivierungscode (76) zugeordnet ist; und
eine Aktivierungseinheit (52), die ausgebildet ist, um die bestimmungsgemäße Funktion des Bauteils (50) nur zu ermöglichen, wenn ein Aktivierungscode (76) vorliegt.

7. Das Bauteil (50) nach Anspruch 6, wobei die Aktivierungseinheit (52) einen Speicher für den Aktivierungscode (76) aufweist und ein Abspeichern des Aktivierungscodes (76) die Aktivierung bewirkt.

8. Das Bauteil (50) nach Anspruch 6 oder Anspruch 7, wobei der Aktivierungscode eine digitale Signatur (74) eines nicht-ersetzbaren Token, NFT (72) aus einer Blockchain (70) ist.

9. Das Bauteil (50) nach einem der Ansprüche 6 bis 8, wobei die PUF (60) eines oder mehr aus dem Folgenden ist:
- ein vorbestimmter Oberflächenabschnitt, für den andere Druckparameter bei der additiven Fertigung genutzt werden;
- ein Abschnitt, bei der Drucker in einem Regime angesteuert wurde, welches zu keinen wiederholbaren Resultaten führt;
- ein vorbestimmter elektrischer Widerstand;
- ein Gütefaktor oder eine Resonanzfrequenz eines Schwingkreises;
- ein vorbestimmter Fingerkondensator.

10. Das Bauteil (50) nach einem der Ansprüche Anspruch 6 bis 9, wobei das Bauteil (50) die Vorrichtung (100) nach einem der Ansprüche 1 bis 5 aufweist.

11. Ein Verfahren zum Authentifizieren eines additiv-gefertigten Bauteils (50), wobei das Bauteil (50) eine physikalisch-unklonbare Funktion (60), PUF, aufweist, die das additiv-gefertigte Bauteil (50) eindeutig identifiziert, das Verfahren umfasst:
- Erzeugen (S110) einer digitalen Signatur (74) aus der PUF (60); und
- Authentifizieren (S120) des additiv-gefertigten Bauteils (50) durch ein Überprüfen der digitalen Signatur (74) über einen nicht-ersetzbaren Token (72), NFT.

12. Das Verfahren nach Anspruch 11, das weiter Folgendes umfasst:
- Vergleichen (S130) der erzeugten digitalen Signatur (74) mit der digitalen Signatur (74'), die in dem NFT (72) gespeichert ist;
- wenn das Vergleichen (S140) eine Übereinstimmung liefert, Aktivieren (S140) des Bauteils (50) durch eine Speicherung eines Aktivierungscodes (76) im Bauteil (50).

13. Das Verfahren nach Anspruch 11 oder Anspruch 12, wobei die digitale Signatur (74) aus PUF-Messgrößen (65) von zumindest einer der folgenden Messungen an der PUF (60) erzeugt wird:
- eine optische Messung,
- eine Widerstandsmessung,
- eine Impedanzmessung,
- eine Bildaufnahme,
- eine spektrale Messung,
- eine Frequenzmessung,
- eine Messung einer Güte eines Schwingkreises,
- eine Messung einer anderen physikalischen Größe.

14. Computer-lesbarer Speicher mit darauf gespeicherter Software, die ausgebildet ist, um das Verfahren nach Anspruch 11 auszuführen, wenn die Software auf einer Datenverarbeitungseinheit ausgeführt wird.
